# EUROPEAN PATENT SPECIFICATION

(11) **EP 4 573 320 B1**
(45) Date of publication and mention of the grant of the patent: **08.04.2026**
(21) Application number: 23765392.8
(22) Date of filing: 18.08.2023
(51) Int. Cl.: F23K 5/08, F23K 5/20, F23K 5/22, F23D 14/00, F23D 14/66, F23K 5/00

(54) **METHOD FOR HEATING A REFORMER WITH AN AMMONIA-FIRED BURNER PRODUCING A STABLE FLAME**
VERFAHREN ZUM BEHEIZEN EINES REFORMERS MIT EINEM AMMONIAK-BRENNER ZUR ERZEUGUNG EINER STABILEN FLAMME
PROCÉDÉ DE CHAUFFAGE D'UN REFORMEUR AVEC UN BRÛLEUR À COMBUSTION D'AMMONIAC PRODUISANT UNE FLAMME STABLE

(30) Priority: 18.08.2022 US 202263399079 P
(43) Date of publication of application: 25.06.2025
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: DHUNGEL, Bhupesh, Newark, DE 19702 (US); TSIAVA, Remi, 75007 Paris (FR)
(74) Representative: Air Liquide
(86) International application number: PCT/US2023/030543
(87) International publication number: WO 2024/039828

(56) References cited:
- EP-A2- 4 001 617
- DE-A1- 102015 213 930
- US-A1- 2022 243 914

## Description

### Background

### Field of the Invention

The present invention relates to combustion of ammonia for providing heat to a reformer process.

### Related Art

Hydrogen is a very useful and interesting molecule for chemistry purposes and energy production but unfortunately is not naturally available as an independent molecule. Hydrogen is abundant on earth but always combined with other elements in natural molecules such as hydrocarbons and ammonia and those making up biomass and all plant species. Hydrogen is therefore obtained by liberating it from its source by any of several various processes, including steam methane reforming (SMR).

In order to supply the necessary energy for the SMR process, typically methane (CH₄) is combusted with air, thereby producing a flue gas mainly composed of carbon dioxide (CO₂), H₂O and nitrogen (N₂) at about 1050°C. After supplying some of the heat of combustion to the steam reforming process, the flue gas is cooled down further by supplying heat to produce steam and by preheating the combustion air before being emitted to the atmosphere via the stack.

The H₂ produced by SMR needs to be purified and therefore it will be processed through several steps such as reduction of carbon monoxide (CO) in the reformate stream by water gas shift reactors, pressure swing adsorption (PSA) and further hydrogen separation/purification devices. The off gas from such purification processes is usually composed of N₂, CO, H₂ with an average heating value around 7,500kJ/kg. This off gas is typically reused as fuel for supplementing the main methane fuel in the reformer burners as described above.

With climate change due to greenhouse gases emissions in the atmosphere, the trend is to strive for zero greenhouse gas emissions.

Each molecule of methane used as a feedstock in a SMR process contains four hydrogen atoms and one carbon atom and produces two molecules of hydrogen (H₂) and one molecule of carbon dioxide (CO₂). Moreover, methane is typically used as fuel for combustion to provide the necessary energy for the SMR process. Therefore, combustion of one molecule of methane will produce one molecule of carbon dioxide which, if not otherwise mitigated, will be emitted into the atmosphere.

To avoid such emissions, it is necessary to find a carbon-free molecule to replace methane both as fuel and feedstock in the SMR process. One such carbon-free molecule is ammonia (NH₃).

Several have proposed using ammonia as a fuel. US 20100019506, for example, discloses a powertrain with a combustion engine configured to combust ammonia as a primary fuel. It also includes an electrical unit configured to supplement the mechanical power. JP 547425632, JP 5287265B and US Patent 8,166.926 B2 describe methods for use of NH₃ in internal combustion engines, where NH₃ is cracked to improve combustion of the engine. US 2022/243914 A1 discloses heating a furnace with an ammonia-fired burner. However, all of these applications involve premixed combustion. In other words, the cracked NH₃ is premixed with the fuel. Similarly, JP 2015190466 A describes a method of waste heat utilization in a power generation device for vaporization of liquid ammonia for combustion. RU 2471082 C2, on the other hand, describes a control system for blending fossil fuel with ammonia when the turbine is operated in a low flammability region such as during start-up.

Other proposals specifically dealing with the cracking of ammonia, such as US 5,976,723 A describe methods and materials of cracking NH3 to produce H₂ as well as methods for using the produced H₂ in fuel cell and internal combustion engines. EP4001617 discloses the cracking of ammonia to produce a fuel for a turbine.

### Summary

A method for heating a furnace with an ammonia-fired burner producing a stable flame including heating a first stream of ammonia through heat exchange with a stream of flue gas, thereby producing a heated first stream of ammonia. Feeding the heated first stream of ammonia to an ammonia cracker to produce a stream of cracked ammonia. Heating a stream of air through heat exchange with the stream of flue gas at a second heat exchanger to produce a heated stream of air. Feeding the heated stream of air to a burner. Feeding a second stream of ammonia to the burner. And feeding the stream of cracked ammonia to the burner for injection into the combustion space to produce a pilot flame through combustion of the injected stream of cracked ammonia and amounts of the injected heated stream of air.

### Brief Description of the Drawings

For a further understanding of the nature and objects of the present invention, reference should be made to the following detailed description, taken in conjunction with the accompanying drawings, in which like elements are given the same or analogous reference numbers and wherein:
**FIG 1** is a schematic of an embodiment of the invention.
**FIG 2** is a schematic of another embodiment of the invention including an additional heat exchanger for initial preheating of a stream of ammonia at a third heat exchanger before it is heated at a first heat exchanger and fed to an ammonia cracker.

### Description of Preferred Embodiments

Although the flammability limit of ammonia is nearly similar to that of methane, the laminar flame speed resulting from combustion of ammonia is about 5 times slower. This results in flame lift off (and incomplete combustion) especially when a conventional burner designed for methane is used. Due to this, and because designing a new burner to handle an ammonia blend from a few percent up to 100% is not trivial, we propose a new ammonia combustion scheme for producing a stable flame. This new ammonia combustion scheme may be used for providing the necessary endothermic heat of a methane reformer or an ammonia cracker.

More specifically, we propose that the burner be fed with heated air and two streams of ammonia (as fuel). The first stream of ammonia is heated through heat exchange with flue gas (obtained from the products of combustion from the burner) and subsequently fed to an ammonia cracker where it is at least partially cracked into a mixture of N₂, H₂, and ammonia (i.e., at least partially cracked ammonia). The second stream of ammonia is fed to the burner, without first being cracked, where it is combusted with heated air to produce a main flame. The at least partially cracked ammonia is fed to the burner where it is combusted with heated air to produce a pilot flame. The presence of H₂ in the pilot flame drastically increases the pilot flame stability. Because a stable pilot flame is present, the main flame may remain rooted to the burner and the tendency for the main flame to lift off is either prevented or reduced.

We will now describe embodiments of the new ammonia combustion scheme.

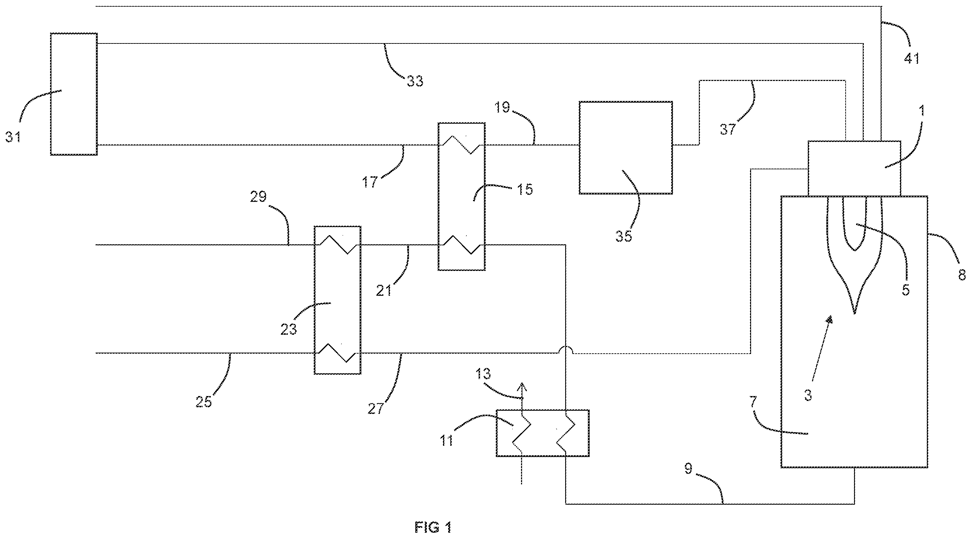

As best shown in **FIG 1****,** a burner **1** produces a main flame **3** and a pilot flame **5** in a combustion space **7** of a furnace **8** to produce a stream of flue gas **9.** While the pilot flame **5** is illustrated as being coaxial with the main flame **3,** the invention is not limited to such a configuration. Depending upon the number and configuration of ammonia fuel injectors of the burner **1,** the pilot flame **5** may be above, below, to the right, or to the left of the main flame **3.** Additionally, the axis of the pilot flame **5** may be angled with respect to the axis of the main flame **3.** While furnace **8** may be any type of furnace known in the field of combustion, typically it is the furnace of a methane reformer or an ammonia cracker. Those skilled in the art of reforming will recognized that reaction tube containing methane to be reformed or ammonia to be cracked are heated through combustion of ammonia with an oxidant, such as air.

Optionally, the stream of flue gas **9** may first be used to produce stream **13** through heat exchange between the stream of flue gas **9** and a stream of water at a boiler **11.**

The stream of flue gas **9** is fed to a first heat exchanger **15** where it heats a first stream of ammonia **17** through heat exchanger thereat to produce a heated first stream of ammonia **19** and a cooled stream of flue gas **21.**

The cooled stream of flue gas **21** is fed to a second heat exchanger **23** where it heats a stream of air **25** through heat exchanger thereat to produce a heated stream of air **27** and a further cooled stream of flue gas **29.**

The first and second streams of ammonia **17, 33** are obtained from a source of ammonia **31.**

The heated stream of ammonia **37** is fed to an ammonia cracker **35** which produces a stream of at least partially cracked ammonia, including ammonia, H₂, and N₂. It should be understood that when the invention is intended to provide heat for cracking ammonia in a main ammonia cracker (not illustrated), the ammonia cracker **35** used to crack the heated stream of ammonia **37** is separate from the main ammonia cracker. While any type of ammonia cracker known in the field of ammonia cracking may be used for ammonia cracker **35,** typically the ammonia cracker **35** is either a heat exchanger (e.g., a shell and tube heat exchanger that is heated in any manner known in the art) or a vessel loaded with catalyst (which allows the dissociation reaction of ammonia to occur at a relatively lower temperature).

Each of the heated stream of air **27,** the stream of at least partially cracked ammonia **37,** and the second stream of ammonia **33** are injected by the burner **1.** Each of the stream of at least partially cracked ammonia **37** and the second stream of ammonia **33** may be injected into the combustion space **7** by the burner **1** through a respective fuel lance or fuel injector or set of fuel lances or fuel injectors. The heated stream of air **27** may be injected into the combustion space **7** by the burner 1 through a respective air injector or set of air injectors. Either or both of the aforementioned fuel/lances injectors or sets of fuel lances/injectors may be situated within an air injector, in a pipe-in-pipe configuration, or placed outside of an air injector. While any type of fuel lance/injector or oxidant injector (for the air) may be used, typically, such lances/injectors are pipes with an open end. The open end may terminate flush with a face of the burner **1,** terminate just shy of a face of the burner **1,** or extend into the combustion space **7.** An electric ignitor may also be permanently inserted in the burner **1** such that its tip is adjacent the fuel lance/injector for injecting the stream of at least partially cracked ammonia **37.** Alternatively, the ignitor may be separate from the burner **1** and inserted into the combustion space **7** by an operator for the purpose of lighting the pilot flame **5.**

Combustion of the injected second stream of ammonia and amounts of the injected heated stream of air **27** produces the main flame **3.** Combustion of the injected stream of at least partially cracked ammonia **37** and the injected heated stream of air **27** produces the pilot flame **5.** This pilot flame **5** remains lit all the time and will help to keep the main flame **3** stable and anchored to the burner **1** no matter how much the composition of second stream of ammonia **33** (i.e., the main fuel) changes. A stream of supplemental fuel **41,** such as pressure swing adsorption (PSA) off-gas (from a PSA used to recover H₂ from the methane reformer or ammonia cracker), may optionally also be injected by the burner **1** into the combustion space **7** where it aids in combustion of the injected stream of cracked ammonia and the injected second stream of ammonia.

Due to the presence of H₂ in the stream of at least partially cracked ammonia, the stability of the pilot flame **5** is drastically increased.

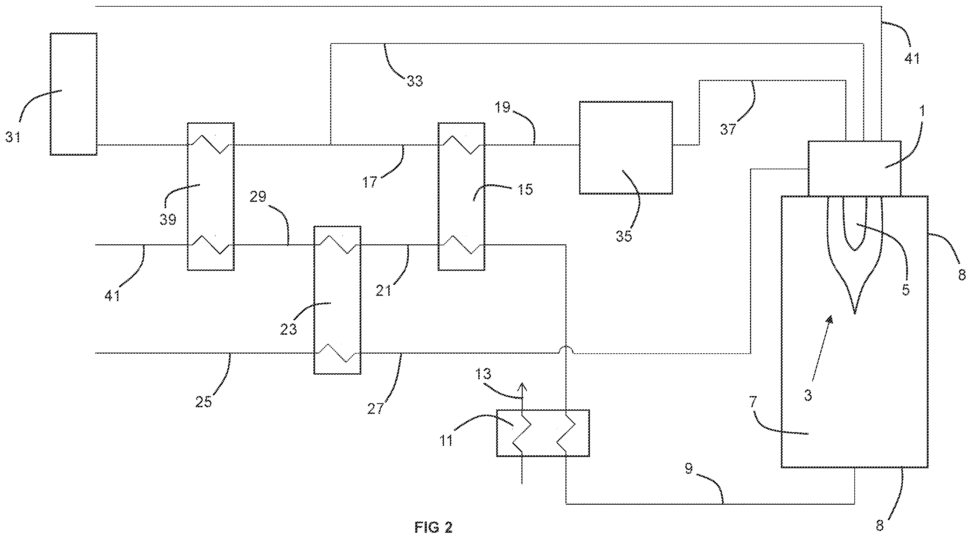

As best illustrated in **FIG 2****,** a stream of ammonia from the source **31** may first be preliminarily heated in a third heat exchanger **39** to produce the first and second streams of ammonia **17, 33.**

### Prophetic Example

A small fraction, for example 5-10%, of a total flow of ammonia (representing for example 75-100kW for a 1MW burner) that makes up the first and second streams is heated in a heat exchanger to 500-600°C using waste heat from the flue gas. This heated ammonia is then dissociated in an ammonia cracker to produce mainly H₂ & N₂ and smaller amounts of uncracked ammonia. If ammonia is heated to a temperature similar to that of the combustion air (i.e., 550°C) as in a typical stream methane reformer (SMR), equilibrium calculations show that the dissociation reaction of ammonia produces about 41 vol. % of H₂ as shown in Table 1. This may be favorably compared to the dissociation of coke oven gas (COG) at the same temperature producing 56 vol. % of H₂ whose combustion yields a stabilized flame. With this dissociation reaction, the lower heating value (LHV) of the pilot fuel (i.e., the cracked ammonia) is higher than the LHV of the main fuel itself by about 5% as shown in Table 2. If a catalyst is used, the conversion rate to H₂ can be increased further, and at a lower temperature, resulting in more flammable pilot fuel. This pilot fuel with a higher LHV and having high percentage of H₂ may be introduced through a separate lance on a SMR burner, and serves as a pilot flame.

Alternatively, fraction of ammonia making up the pilot fuel is preliminarily heated up using waste heat of the flue gas from the furnace preferably upstream of the SCR to temperature about 250°C. The produced feed to the ammonia cracker, now at about 250°C, is then further heated through heat exchange with the flue gas as described above. Unlike a conventional SMR, the flue gas can be cooled to relatively lower temperatures since there is no CO₂ in the flue gas, thereby making this scheme feasible. This alternative option increases the combustion kinetics of the main fuel as well enabling more stable combustion.

**Table 1: Ammonia Dissociation at 550°C (Equilibrium)**

| | Vol. % |
|---|---|
| NH3 | 46 |
| H2 | 41 |
| N2 | 13 |

**Table 2: LHV of Different Fuel Streams**

| | KJ/kg |
|---|---|
| Main Fuel (NH3) | 18,603 |
| Pilot Fuel (dissociated NH3) | 19,609 |
| Off Gas | 3,686¹ |

| | |
|---|---|
| ¹As off-gas composition for a SMR using NH₃ as a feedstock is unknown, an offgas composition with 20 vol. % H₂, 10 vol. % NH₃, and 70 vol. % N₂ is assumed | |

Besides enabling stable flame for ammonia as a fuel, additional advantages of the invention include:
- potential application to existing burners by using an injection lance for injection of the cracked stream of ammonia as pilot fuel
- no external heat is required for the ammonia dissociation reaction in the ammonia cracker since waste heat from flue gas can be used

While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the scope of the appended claims. The present invention may suitably comprise, consist or consist essentially of the elements disclosed and may be practiced in the absence of an element not disclosed. Furthermore, if there is language referring to order, such as first and second, it should be understood in an exemplary sense and not in a limiting sense. For example, it can be recognized by those skilled in the art that certain steps can be combined into a single step.

The singular forms "a", "an" and "the" include plural referents, unless the context clearly dictates otherwise.

"Comprising" in a claim is an open transitional term which means the subsequently identified claim elements are a nonexclusive listing i.e. anything else may be additionally included and remain within the scope of "comprising." "Comprising" is defined herein as necessarily encompassing the more limited transitional terms "consisting essentially of" and "consisting of"; "comprising" may therefore be replaced by "consisting essentially of" or "consisting of" and remain within the expressly defined scope of "comprising".

"Providing" in a claim is defined to mean furnishing, supplying, making available, or preparing something. The step may be performed by any actor in the absence of express language in the claim to the contrary.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

## Claims

1. A method for heating a furnace (8) with an ammonia-fired burner (1) producing a stable flame, comprising:
heating a first stream of ammonia (17) through heat exchange with a stream of flue gas, thereby producing a heated first stream of ammonia (19);
feeding the heated first stream of ammonia (19) to an ammonia cracker (35) to produce a stream of cracked ammonia;
heating a stream of air (25) through heat exchange with the stream of flue gas (9) at a second heat exchanger (23) to produce a heated stream of air (27);
feeding the heated stream of air (27) to a burner (1) for injection into a combustion space (7) of a furnace (8);
feeding a second stream of ammonia (33) to the burner (1) for injection into the combustion space (7) to produce a main flame (3) through combustion of the injected second stream of ammonia (33) and amounts of the injected heated stream of air (27); and
feeding the stream of cracked ammonia to the burner (1) for injection into the combustion space (7) to produce a pilot flame (5) through combustion of the injected stream of cracked ammonia and amounts of the injected heated stream of air (27), wherein the main and pilot flames (3, 5) produce products of combustion from which the stream of flue gas (9) is obtained.

2. The method of claim 1, wherein the stream of flue gas (9) is first cooled through said heat exchange with the first stream of ammonia (19) and then cooled through said heat exchange with the stream of air (25).

3. The method of claim 1, wherein:
the first and second streams of ammonia (19, 33) are obtained from a source of ammonia (31);
said method further comprises a step of preheating a stream of ammonia, from which the first and second streams of ammonia (19, 33) are obtained;
splitting the preheated stream of ammonia, from which the first and second streams of ammonia (19, 33) are obtained, into the first and second streams of ammonia (19, 33); and
preheating the first stream of ammonia (19) heat through exchange with the stream of flue gas (9) at a third heat exchanger (39), wherein said first stream of ammonia (19) is first preheated through said heat exchange at the third heat exchanger (39) and then heated through said heat exchange at the first heat exchanger (15).

4. The method of claim 2, wherein:
the first and second streams of ammonia (19, 33) are obtained from a source of ammonia (31);
said method further comprises a step of preheating a stream of ammonia, from which the first and second streams of ammonia (19, 33) are obtained;
splitting the preheated stream of ammonia, from which the first and second streams of ammonia (19, 33) are obtained, into the first and second streams of ammonia (19, 33); and
preheating the first stream of ammonia (19) heat through exchange with the stream of flue gas (9) at a third heat exchanger (39), wherein said first stream of ammonia (19) is first preheated through said heat exchange at the third heat exchanger (39) and then heated through said heat exchange at the first heat exchanger (15).

5. The method of claim 1, wherein the furnace (8) is the furnace (8) of an ammonia cracker (35).

6. The method of claim 1, wherein the furnace (8) is the furnace (8) of a methane reformer.

7. The method of claim 1, wherein each of the second stream of ammonia and the stream of cracked ammonia is injected by the burner (1) with a respective lance or injector or a respective set of lances or injectors.

8. The method of claim 1, wherein the furnace (8) is the furnace (8) of a methane reformer.

9. The method of claim 1, wherein the furnace (8) is the furnace (8) of a main ammonia cracker.

10. The method of claim 8, further comprising the steps of:
separating reformed methane from the methane reformer with a PSA into at least a H₂ product stream and a PSA off-gas; and
injecting at least some of the PSA off-gas with the burner (1) into the combustion space (7) to participate in combustion of the injected second stream of ammonia (33) with the injected stream of heated air (27) in the combustion space (7).

11. The method of claim 9, further comprising the steps of:
separating cracked ammonia from the main ammonia cracker with a PSA into at least a H₂ product stream and a PSA off-gas; and
injecting at least some of the PSA off-gas with the burner (1) into the combustion space (7) to participate in combustion of the injected second stream of ammonia (33) with the injected stream of heated air (27) in the combustion space (7).

12. The method of claim 1, wherein the ammonia cracker (35) is a shell and tube heat exchanger.

13. The method of claim 1, wherein the ammonia cracker (35) is a vessel loaded with catalyst.

## Patentansprüche

1. Ein Verfahren zum Heizen eines Ofens (8) mit einem ammoniakbefeuerten Brenner (1), der eine stabile Flamme erzeugt, umfassend:
Erwärmen eines ersten Ammoniakstroms (17) durch Wärmeaustausch mit einem Rauchgasstrom, wodurch ein erwärmter erster Ammoniakstrom (19) erzeugt wird;
Zuführen des erwärmten ersten Ammoniakstroms (19) zu einem Ammoniak-Cracker (35), um einen Strom von gecracktem Ammoniak zu erzeugen;
Erwärmen eines Luftstroms (25) durch Wärmeaustausch mit dem Rauchgasstrom (9) an einem zweiten Wärmetauscher (23), um einen erwärmten Luftstrom (27) zu erzeugen;
Zuführen des erwärmten Luftstroms (27) zu einem Brenner (1) zur Einleitung in einen Brennraum (7) eines Ofens (8);
Zuführen eines zweiten Ammoniakstroms (33) zum Brenner (1) zur Einleitung in den Brennraum (7), um eine Hauptflamme (3) durch Verbrennung des eingeleiteten zweiten Ammoniakstroms (33) und Mengen des eingeleiteten erwärmten Luftstroms (27) zu erzeugen; und
Zuführen des Stroms von gecracktem Ammoniak zum Brenner (1) zur Einleitung in den Brennraum (7), um eine Pilotflamme (5) durch Verbrennung des eingeleiteten Stroms von gecracktem Ammoniak und Mengen des eingeleiteten erwärmten Luftstroms (27) zu erzeugen, wobei die Haupt- und Pilotflammen (3, 5) Verbrennungsprodukte erzeugen, aus denen der Rauchgasstrom (9) gewonnen wird.

2. Das Verfahren nach Anspruch 1, wobei der Rauchgasstrom (9) zuerst durch den Wärmeaustausch mit dem ersten Ammoniakstrom (19) gekühlt und dann durch den Wärmeaustausch mit dem Luftstrom (25) gekühlt wird.

3. Das Verfahren nach Anspruch 1, wobei:
der erste und zweite Ammoniakstrom (19, 33) aus einer Ammoniakquelle (31) gewonnen werden;
das Verfahren ferner einen Schritt des Vorwärmens eines Ammoniakstroms umfasst, aus dem der erste und zweite Ammoniakstrom (19, 33) gewonnen werden; Aufteilen des vorgewärmten Ammoniakstroms, aus dem der erste und zweite Ammoniakstrom (19, 33) gewonnen werden, in den ersten und zweiten Ammoniakstrom (19, 33); und
Vorwärmen des ersten Ammoniakstroms (19) durch Wärmeaustausch mit dem Rauchgasstrom (9) an einem dritten Wärmetauscher (39), wobei der erste Ammoniakstrom (19) zuerst durch den Wärmeaustausch am dritten Wärmetauscher (39) vorgewärmt und dann durch den Wärmeaustausch am ersten Wärmetauscher (15) erwärmt wird.

4. Das Verfahren nach Anspruch 2, wobei:
der erste und zweite Ammoniakstrom (19, 33) aus einer Ammoniakquelle (31) gewonnen werden;
das Verfahren ferner einen Schritt des Vorwärmens eines Ammoniakstroms umfasst, aus dem der erste und zweite Ammoniakstrom (19, 33) gewonnen werden;
Aufteilen des vorgewärmten Ammoniakstroms, aus dem der erste und zweite Ammoniakstrom (19, 33) gewonnen werden, in den ersten und zweiten Ammoniakstrom (19, 33); und
Vorwärmen des ersten Ammoniakstroms (19) durch Wärmeaustausch mit dem Rauchgasstrom (9) an einem dritten Wärmetauscher (39), wobei der erste Ammoniakstrom (19) zuerst durch den Wärmeaustausch am dritten Wärmetauscher (39) vorgewärmt und dann durch den Wärmeaustausch am ersten Wärmetauscher (15) erwärmt wird.

5. Das Verfahren nach Anspruch 1, wobei der Ofen (8) der Ofen (8) eines Ammoniak-Crackers (35) ist.

6. Das Verfahren nach Anspruch 1, wobei der Ofen (8) der Ofen (8) eines Methanreformers ist.

7. Das Verfahren nach Anspruch 1, wobei jeder des zweiten Ammoniakstroms und des Stroms von gecracktem Ammoniak durch den Brenner (1) mit einer jeweiligen Lanze oder einem Injektor oder einem jeweiligen Satz von Lanzen oder Injektoren eingeleitet wird.

8. Das Verfahren nach Anspruch 1, wobei der Ofen (8) der Ofen (8) eines Methanreformers ist.

9. Das Verfahren nach Anspruch 1, wobei der Ofen (8) der Ofen (8) eines Haupt-Ammoniak-Crackers ist.

10. Das Verfahren nach Anspruch 8, ferner umfassend die Schritte:
Abtrennen von reformiertem Methan aus dem Methanreformer mit einer PSA in mindestens einen H2-Produktstrom und ein PSA-Abgas; und
Einleiten von mindestens einem Teil des PSA-Abgases mit dem Brenner (1) in den Brennraum (7), um an der Verbrennung des eingeleiteten zweiten Ammoniakstroms (33) mit dem eingeleiteten Strom von erwärmter Luft (27) im Brennraum (7) teilzunehmen.

11. Das Verfahren nach Anspruch 9, ferner umfassend die Schritte:
Abtrennen von gecracktem Ammoniak aus dem Haupt-Ammoniak-Cracker mit einer PSA in mindestens einen H2-Produktstrom und ein PSA-Abgas; und
Einleiten von mindestens einem Teil des PSA-Abgases mit dem Brenner (1) in den Brennraum (7), um an der Verbrennung des eingeleiteten zweiten Ammoniakstroms (33) mit dem eingeleiteten Strom von erwärmter Luft (27) im Brennraum (7) teilzunehmen.

12. Das Verfahren nach Anspruch 1, wobei der Ammoniak-Cracker (35) ein Rohrbündelwärmetauscher ist.

13. Das Verfahren nach Anspruch 1, wobei der Ammoniak-Cracker (35) ein mit Katalysator beladener Behälter ist.

## Revendications

1. Un procédé de chauffage d'un four (8) avec un brûleur alimenté à l'ammoniac (1) produisant une flamme stable, comprenant :
le chauffage d'un premier flux d'ammoniac (17) par échange de chaleur avec un flux de gaz de combustion, produisant ainsi un premier flux d'ammoniac chauffé (19) ;
l'alimentation du premier flux d'ammoniac chauffé (19) à un craqueur d'ammoniac (35) pour produire un flux d'ammoniac craqué ;
le chauffage d'un flux d'air (25) par échange de chaleur avec le flux de gaz de combustion (9) au niveau d'un deuxième échangeur de chaleur (23) pour produire un flux d'air chauffé (27) ;
l'alimentation du flux d'air chauffé (27) à un brûleur (1) pour injection dans un espace de combustion (7) d'un four (8);
l'alimentation d'un second flux d'ammoniac (33) au brûleur (1) pour injection dans l'espace de combustion (7) pour produire une flamme principale (3) par la combustion du second flux d'ammoniac injecté (33) et de quantités du flux d'air chauffé injecté (27) ; et
l'alimentation du flux d'ammoniac craqué au brûleur (1) pour injection dans l'espace de combustion (7) pour produire une flamme pilote (5) par la combustion du flux d'ammoniac craqué injecté et de quantités du flux d'air chauffé injecté (27), dans lequel les flammes principale et pilote (3, 5) produisent des produits de combustion à partir desquels le flux de gaz de combustion (9) est obtenu.

2. Le procédé selon la revendication 1, dans lequel le flux de gaz de combustion (9) est d'abord refroidi par ledit échange de chaleur avec le premier flux d'ammoniac (19) puis refroidi par ledit échange de chaleur avec le flux d'air (25).

3. Le procédé selon la revendication 1, dans lequel :
les premier et second flux d'ammoniac (19, 33) sont obtenus à partir d'une source d'ammoniac (31) ;
ledit procédé comprend en outre une étape de préchauffage d'un flux d'ammoniac, à partir duquel les premier et second flux d'ammoniac (19, 33) sont obtenus ; la division du flux d'ammoniac préchauffé, à partir duquel les premier et second flux d'ammoniac (19, 33) sont obtenus, en les premier et second flux d'ammoniac (19, 33) ; et
le préchauffage du premier flux d'ammoniac (19) par échange de chaleur avec le flux de gaz de combustion (9) au niveau d'un troisième échangeur de chaleur (39), dans lequel ledit premier flux d'ammoniac (19) est d'abord préchauffé par ledit échange de chaleur au niveau du troisième échangeur de chaleur (39) puis chauffé par ledit échange de chaleur au niveau du premier échangeur de chaleur (15).

4. Le procédé selon la revendication 2, dans lequel :
les premier et second flux d'ammoniac (19, 33) sont obtenus à partir d'une source d'ammoniac (31) ;
ledit procédé comprend en outre une étape de préchauffage d'un flux d'ammoniac, à partir duquel les premier et second flux d'ammoniac (19, 33) sont obtenus ;
la division du flux d'ammoniac préchauffé, à partir duquel les premier et second flux d'ammoniac (19, 33) sont obtenus, en les premier et second flux d'ammoniac (19, 33) ; et
le préchauffage du premier flux d'ammoniac (19) par échange de chaleur avec le flux de gaz de combustion (9) au niveau d'un troisième échangeur de chaleur (39), dans lequel ledit premier flux d'ammoniac (19) est d'abord préchauffé par ledit échange de chaleur au niveau du troisième échangeur de chaleur (39) puis chauffé par ledit échange de chaleur au niveau du premier échangeur de chaleur (15).

5. Le procédé selon la revendication 1, dans lequel le four (8) est le four (8) d'un craqueur d'ammoniac (35).

6. Le procédé selon la revendication 1, dans lequel le four (8) est le four (8) d'un reformeur de méthane.

7. Le procédé selon la revendication 1, dans lequel chacun du second flux d'ammoniac et du flux d'ammoniac craqué est injecté par le brûleur (1) avec une lance ou un injecteur respectif ou un ensemble respectif de lances ou d'injecteurs.

8. Le procédé selon la revendication 1, dans lequel le four (8) est le four (8) d'un reformeur de méthane.

9. Le procédé selon la revendication 1, dans lequel le four (8) est le four (8) d'un craqueur d'ammoniac principal.

10. Le procédé selon la revendication 8, comprenant en outre les étapes de :
la séparation du méthane reformé du reformeur de méthane avec un PSA en au moins un flux de produit H2 et un gaz de sortie de PSA ; et
l'injection d'au moins une partie du gaz de sortie de PSA avec le brûleur (1) dans l'espace de combustion (7) pour participer à la combustion du second flux d'ammoniac injecté (33) avec le flux d'air chauffé injecté (27) dans l'espace de combustion (7).

11. Le procédé selon la revendication 9, comprenant en outre les étapes de :
la séparation de l'ammoniac craqué du craqueur d'ammoniac principal avec un PSA en au moins un flux de produit H2 et un gaz de sortie de PSA ; et
l'injection d'au moins une partie du gaz de sortie de PSA avec le brûleur (1) dans l'espace de combustion (7) pour participer à la combustion du second flux d'ammoniac injecté (33) avec le flux d'air chauffé injecté (27) dans l'espace de combustion (7).

12. Le procédé selon la revendication 1, dans lequel le craqueur d'ammoniac (35) est un échangeur de chaleur à calandre et à tubes.

13. Le procédé selon la revendication 1, dans lequel le craqueur d'ammoniac (35) est une cuve chargée d'un catalyseur.
